Europäisches Patentamt

European Patent Office

Office européen des brevets

(11) Publication number: **0 092 974**
**A1**

# (12) EUROPEAN PATENT APPLICATION

(21) Application number: **83302259.3**

(22) Date of filing: **21.04.83**

(51) Int. Cl.³: **B 65 G 51/02**

(30) Priority: **22.04.82 GB 8211775**

(43) Date of publication of application:
**02.11.83 Bulletin 83/44**

(84) Designated Contracting States:
**BE DE FR GB IT NL**

(71) Applicant: **REDIFFUSION BUSINESS ELECTRONICS LIMITED**
**Rediffusion House Red Lion Road**
**Surbiton Surrey(GB)**

(72) Inventor: **Chinner, James Albert**
**April Cottage Everton Road**
**Hordle Nr. Lymington Hampshire(GB)**

(74) Representative: **Allman, Peter John et al,**
**WHEATLEY & MACKENZIE Scottish Life House Bridge Street**
**Manchester M3 3DP(GB)**

(54) Pneumatic conveyor systems.

(57) A pneumatic conveyor system comprising at least one launching station, at least one receiving station, a conveyor tube interconnecting the launching and receiving stations, a collapsible container for insertion into the tube at the launching station, and a blower for blowing the container along the tube to the receiving station. The container is in the form of a fully collapsible bag of flexible material which when filled with a commodity to be conveyed assumes a shape which enables it to be pneumatically propelled along the tube. The bag may by a simple polythene bag.

FIG. 5

EP 0 092 974 A1

Croydon Printing Company Ltd.

2.

The present invention relates to pneumatic conveyor systems.

Pneumatic conveyor systems are in increasing demand for use in conveying paper money. Such systems are particularly attractive because they can significantly improve security in for example retail outlets having a number of cash-taking check-outs. The insurance premiums charged to such retail outlets to cover the risk of thefts from the check-outs rises rapidly when sums of more than one hundred pounds can accummulate at any one check-out. Accordingly it has proved financially worthwhile to employ security staff to transfer cash from the check-outs to a secure cash office at regular intervals, e.g. hourly.

Some large retail outlets have installed pneumatic cash conveyors in which rigid containers are propelled from a launching station along a plastics tube to a receiving station. The plastics tube must be of large diameter, e.g. 110mm, must be manufactured to close tolerances, particularly the bends which must be of large radius, e.g. 800mm, to avoid possible jamming, and the plastics tube must be provided with a fire proof outer sleeve to prevent fire passing through any fire barrier penetrated by the tube. Furthermore it is necessary to store a supply of rigid containers at each launching station and to replenish that store with containers returned from the receiving station to which cash is transferred. Available space at the check-outs is limited, and the launching stations from which containers are launched into the tube are large and cannot be easily accommodated at each check-out. Generally in practice only one launching station is provided for a group of for example five check-outs. Unfortunately this means that cash still has to be carried between the check-outs and the launching station and even with the small distances involved it can be necessary to employ more security staff for this purpose in large retail outlets.

One commercially available system seeks to overcome the above problems by using a partially collapsible container. This makes it possible to reduce the dimensions of the tube and therefore the launching station, to reduce the radius of bends, and to reduce the space required for storing the containers at check-outs. In this known system the partially collapsible container comprises two generally planar non-foldable sheets of material arranged in parallel and interconnected by a bellows-like flexible fabric. The sheets are bent towards each other at one end to define a tapered nose and support resilient tail flaps at the other end to improve sealing. Thus the container when filled with cash has a rectangular cross-section determined by the width of the planar sheets and the width of the bellows when expanded and requires an appropriately shaped tube.

The partially collapsible container is relatively expensive and despite the ruggedness of the planar sheets is prone to damage so that it has a limited life.

It is an object of the present invention to provide a pneumatic conveyor system having an improved collapsible container.

The present invention is based on the realisation that it is not necessary to provide a container which has any inherent structural shape as in the case of rigid containers or the known partially collapsible containers, providing the insertion of cash into the container causes it to assume a suitable shape to enable it to be propelled along the system tube.

According to the present invention there is provided a pneumatic conveyor system comprising at least one launching station, at least one receiving station, a conveyor tube interconnecting the launching and receiving stations, a collapsible container for insertion into the tube at the launching station, and means for blowing the container along the tube to the receiving station, characterised in that the container is in the form of a fully collapsible bag of flexible material adapted when filled with a commodity to be conveyed to assume a shape which enables it to be pneumatically propelled along the tube.

Preferably the container is in the form of a plastics bag.

The tube may be of circular cross section and the bag may have a form such that when expanded it assumes roughly the shape of a cylinder. Preferably the expanded bag diameter is less than the internal diameter of the tube.

An embodiment of the present invention will now be described by way of example with reference to the accompanying drawings, in which :

Fig. 1 schematically illustrates the layout of a conveyor system embodying the invention;

Figs. 2, 3 and 4 are respectively side, end and cross sectional views of a collapsible container into which cash has been inserted;

Fig. 5 illustrates the passage of a container around a bend; and

Fig. 6 illustrates a container launching station.

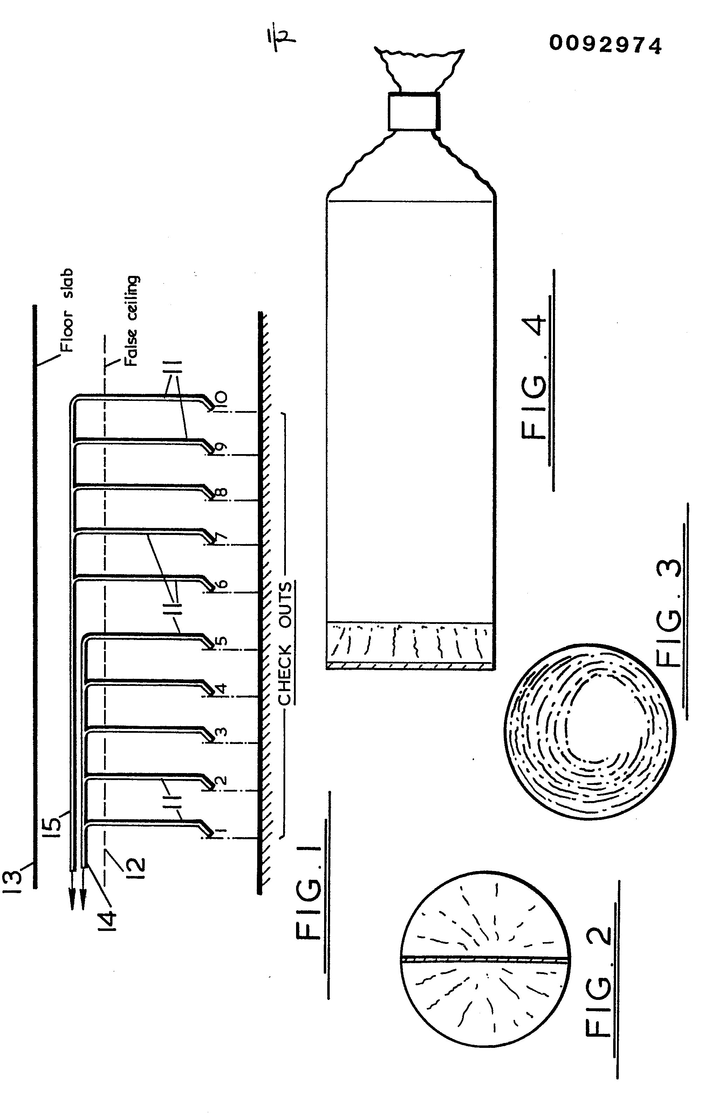

Referring to Fig. 1, the illustrated system comprises ten launching stations 1 to 10 each located adjacent a respective one of ten check-out positions. Each launching station is connected to a respective tube 11 running vertically into a ceiling void defined between a false ceiling 12 and a floor slab 13. The tubes 11 from stations 1 to 5 are connected to a common trunk tube 14 and the tubes 11 from stations 6 to 10 are connected to a common trunk tube 15. Obviously if more than ten check-outs were to be served they would be connected in similar groups to further trunk tubes in the ceiling void. All of the tubes are of the same internal diameter and each of the launching stations comprises a normally closed flap through which containers can be inserted into the tube.

The trunk tubes 14 and 15 extend to a receiving station in a secure area to which containers are to be delivered. A blower is located at the receiving station and arranged to draw air through the tube system so as to propell containers in the tube system to the receiving station. For a tube system having a nominal 60mm internal diameter a three horse power three phase blower would be more than adequate. The receiving station is thus conventional and will not therefore be further described herein.

The described system is intended to convey paper money in simple plastics bags of the type commonly used to contain food in freezers. For English currency it has been found that a polythene bag will be conveyed reliably through a nominally 60mm tube if it is dimensioned such that in its expanded cyclindrical state it has a diameter of 50mm and a length of 205mm. Figs. 2 to 4 illustrate such a bag. Fig. 2 shows the permanently sealed end of the bag after a roll of notes has been inserted, the notes being rolled about an axis parallel to their longer sides as shown by the cross sectional view of Fig. 3. The notes could however be rolled about an axis parallel to their shorter sides. English one pound notes have a width of 67mm, and five pound notes have a width of 77mm, so that even if only a few notes were inserted and not rolled, insertion of the bag into the nominal 60mm tube would force the notes to assume a non-planar configuration, thereby causing the bag to expand from its initial flat configuration.  Fig. 4 shows a side view of the bag, the normally open end being closed by a simple closure of for example adhesive tape.  It has been found that although the bags should ideally be filled by a substantial number of rolled notes the bag will generally be safely delivered even if not properly filled.

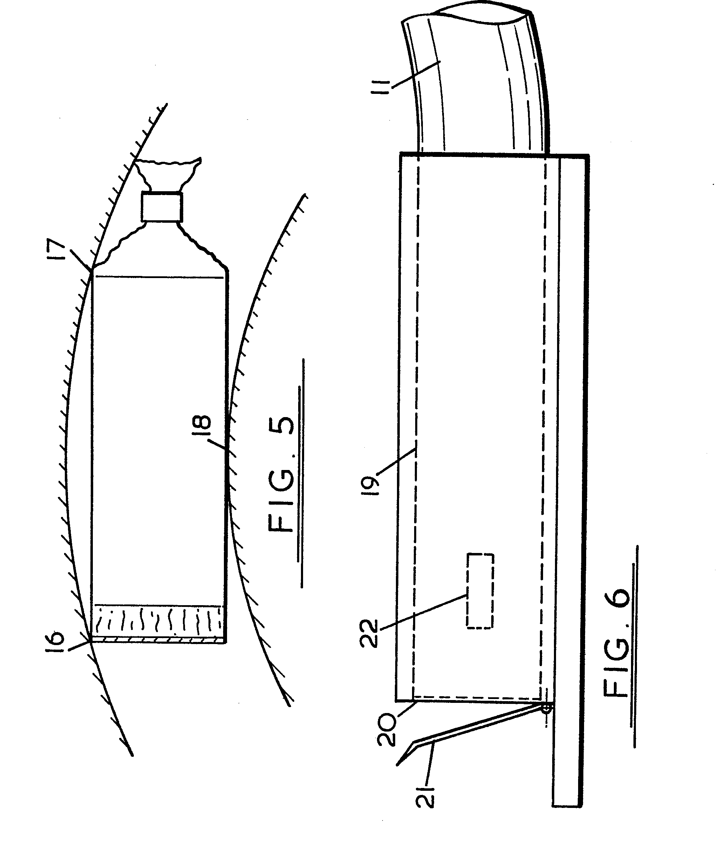

Fig. 5 shows a container bag negotiating a bend in a tube.  The outline of the bag corresponds to that shown in Fig. 4.  If the bend is very tight, creasing will occur at corners 16 and 17 and at central portion 18 but this will not cause problems given the flexibility of the bag.

Referring to Fig. 6, a launching station is schematically illustrated.  The launching station is connected to tube 11 (Fig. 1) and comprises a housing through which a continuation 19 of the tube 11 extends to an aperture 20 normally closed by a door 21.  When it is desired to despatch a container, the door 21 is opened, the container is inserted into the continuation  tube 19 and a trigger 22 is pressed.  The blower located at the receiving station then sucks the container along the tube to the receiving station and then the door 21 is closed.  It will be appreciated that interlocks will be provided between the various launching stations to prevent despatch of two containers simultaneously, but this and other despatch control features are conventional and are thus not described in detail herein. The source of containers arriving at the receiving station can be identified by appropriate labelling specific to individual launching stations or launching station operators.

It has been found that if the polythene bags are used only once and then destroyed they are still considerably cheaper to use than the previously known collapsible containers. In fact the bags are generally sufficiently robust to withstand at least thirty trips of seventy metres. It is however inevitable that occasionally a bag will burst in the conveyor tube. This does not result however in the system jamming up as providing the blower has adequate capacity the bag and any notes lost from it will still be delivered to the receiving station.

It is possible to arrange a skirt on the bags to improve sealing between the bag and the tube but this increases the cost of the bags and is not generally necessary.

It will be appreciated that even with conventional rigid containers only paper money is conveyed through systems of this type as otherwise the momentum of the container could be sufficient to seriously damage the container, the tube system and/or the receiving station.

Thus the bags do not have to withstand great forces.

The use of highly flexible plastics bags enables the use of cheaper tubing than for conventional conveyor systems. Indeed available steel tubing can be used which requires no fireproofing, in contrast to the conventionally used plastics tubing which requires a stainless steel fireproof cladding.

10.

0092974

CLAIMS:

1. A pneumatic conveyor system comprising at least one launching station, at least one receiving station, a conveyor tube interconnecting the launching and receiving stations, a collapsible container for insertion into the tube at the launching station, and means for blowing the container along the tube to the receiving station, characterised in that the container is in the form of a fully collapsible bag of flexible material adapted when filled with a commodity to be conveyed to assume a shape which enables it to be pneumatically propelled along the tube.

2. A pneumatic conveyor system according to claim 1, wherein the collapsible container is a plastics bag.

3. A pneumatic conveyor system according to claim 1 or 2, wherein the tube is of circular cross section and the bag has a form such that when it is filled it assumes the shape of a cylinder.

4. A pneumatic conveyor system according to claim 3, wherein the fully expanded bag diameter is less than the internal diameter of the tube.

13

15

14

12

Floor slab

False ceiling

11     11     11

1   2   3   4   5   6   7   8   9   10

CHECK OUTS

FIG. 1

FIG. 2

FIG. 3

FIG. 4

FIG. 5

FIG. 6

2/2

0092974

| | DOCUMENTS CONSIDERED TO BE RELEVANT | | EP 83302259.3 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X | PATENT ABSTRACTS OF JAPAN, unexamined applications, M field, vol. 4, no. 102, July 22, 1980 THE PATENT OFFICE JAPANESE GOVERNMENT page 153 M 22 <br><br> * Kokai no. 55-61 528 * <br><br> -- | 1,3,4 | B 65 G 51/02 |
| A | CH - A - 559 686 (AKTIEBOLAGET SVENSKA FLAKTFABRIKEN) <br><br> * Fig. * <br><br> ---- | 1,3,4 | |

| | TECHNICAL FIELDS SEARCHED (Int. Cl. ³) |
|---|---|
| | B 65 G 51/00 |

The present search report has been drawn up for all claims

| Place of search | Date of completion of the search | Examiner |
|---|---|---|
| VIENNA | 15-07-1983 | PISSENBERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document